# EUROPEAN PATENT APPLICATION

(11) **EP 4 708 781 A1**
(43) Date of publication of application: **11.03.2026**
(21) Application number: 24940891.5
(22) Date of filing: 26.11.2024
(51) Int. Cl.: H04L 12/40

(54) **CAN DATA RECEIVING METHOD AND APPARATUS FOR AUTOMATIC TRAIN OPERATION SYSTEM**

(30) Priority: 29.05.2024 CN 202410674743
(71) Applicant: CRSC Research & Design Institute Group Co., Ltd., Beijing 100070 (CN)
(72) Inventor: LI, Xu, Beijing 100070 (CN); HUANG, Binbin, Beijing 100070 (CN); LI, Xingguo, Beijing 100070 (CN); DONG, Bowei, Beijing 100070 (CN); LI, Shiwei, Beijing 100070 (CN)
(74) Representative: Haseltine Lake Kempner LLP
(86) International application number: PCT/CN2024/134664
(87) International publication number: WO 2025/246227

(57) **Abstract**

This disclosure relates to the technical field of rail communication, and in particular to a CAN data receiving method and device for an Automatic Train Operation (ATO) system. Detecting CAN channel communication by comparing the number of packets of a CANO channel and the number of packets of a CAN1 channel and receiving data, when either the number of packets of the CANO channel or the number of packets of the CAN1 channel is greater than zero; identifying a CAN ID sequence number of the received data and comparing it with a sequence number expected to be received; and performing packet receiving according to a comparison result of the sequence numbers. This disclosure fully utilizes the redundancy of the two CAN communication channels. It respectively identifies the CAN ID sequence numbers of the same type of data on the redundant channels and compares them with the sequence number expected to be received. If correct, the data is accepted; if abnormal, it is either discarded or retained. By fully leveraging redundant transmission, it ensures that each received packet is verified against the data from both communication channels in terms of type and sequence number, thereby guaranteeing the accuracy and continuity of the data.

## Description

### TECHNICAL FIELD

This disclosure relates to the technical field of rail communication, and in particular to a CAN data receiving method and device for an Automatic Train Operation (ATO) system.

### BACKGROUND

In the existing Automatic Train Operation (ATO) system, the communication manner of CAN bus is still used for data transmission between boards and devices. In the prior art, two CAN buses are used to perform redundant communication. Comparing with communication using a single CAN bus, the redundant communication can effectively improve data reliability. During the reception, redundant data from the two CAN buses are received, and the numbers of packet of the two CAN buses are compared. If the data of the CAN bus having the greater number of packets is received, then, when an abnormal case in which the transmitting end repeatedly transmits the same packet occurs, the duplicated packets will be received, causing subsequent logical problems. If the data of the CAN bus having a smaller number of packets is received, then, when an abnormal case in which a data packet loss on this bus occurs, fewer packets will be received, also causing subsequent logical problems. If the numbers of packets of the two CAN buses are equal to each other, an abnormal data on either bus will lead to the inability to receive data, which will lead to the data being actively discarded after the data cache is full.

In view of the problems brought by the above data receiving methods, a more effective redundant channel receiving method is needed.

### SUMMARY

With respect to the above problems, this disclosure provides a CAN data receiving method and device for an Automatic Train Operation system to improve the reliability of redundant CAN communication.

On the first aspect, a CAN data receiving method for an Automatic Train Operation system comprises:
detecting CAN channel communication by comparing the number of packets of a CANO channel and the number of packets of a CAN1 channel and receiving data, when either the number of packets of the CANO channel or the number of packets of the CAN1 channel is greater than zero;
identifying a CAN ID sequence number of the received data and comparing it with a sequence number expected to be received; and
performing packet receiving according to a comparison result of the sequence numbers.

Specifically, the sequence number is incremented during the reception. For example, if the sequence number of the previous packet in the received data is 3, then the sequence number of the next packet will be 4.

Further, either the number of packets of the CANO channel or the number of packets of the CAN1 channel is greater than zero comprises:
classifying the data received from the CANO and the CAN1, and storing the data into different FIFOs according to a bus and a data type to which the data belongs (FIFO, namely, first in first out, refers to a type of data storage or buffer that operates in a first-in and first out manner); and
obtaining the number of FIFO packets of the CANO and the number of FIFO packets of the CAN1 of the same data type, and detecting CAN channel communication by comparing the number of packets of the CANO and the number of packets of the CAN1 when either the number of packets of the CANO or the number of packets of the CAN 1 is greater than zero.

Further, classifying the data received from the CANO and the CAN1, and storing the data into different FIFOs according to a bus and a data type to which the data belongs, comprises:
classifying the data by identifying data type information in the CAN ID of each packet, wherein the Automatic Train Operation system uses redundant CAN buses communication, namely the CANO and the CAN1, and wherein various types of communication data are included on the buses;
storing the data belongs to different data types from the CANO and the CAN1 buses into different FIFOs, respectively.

Further, storing the data belongs to different data types from the CANO and the CAN1 buses into different FIFOs, respectively, comprises:
periodically receiving packets in the CANO channel and the CAN1 channel via a communication port, reading the number of packets for each channel, and for each packet within this number, reading information representing the data type in the CAN ID of each packet, and determining the data type of each packet based on the different type information;
storing the data of different data types from the CANO bus into different FIFOs, namely storing the data of a first type into a CAN0-1 FIFO, storing the data of a second type into a CAN0-2 FIFO, ... and storing the data of a X^{th} type into a CAN0-X FIFO; and
storing the data of different data types from the CAN1 bus into different FIFOs, namely storing the data of the first type into a CAN1-1 FIFO, storing the data of the second type into a CAN1-2 FIFO, ... and storing the data of the X^{th} type into a CAN1-X FIFO.

Further, obtaining the number of FIFO packets of the CANO and the number of FIFO packets of the CAN1 of the same data type, and detecting CAN channel communication by comparing the number of packets of the CANO and the number of packets of the CAN1 when either the number of packets of the CANO or the number of packets of the CAN1 is greater than zero, comprises:
reading, from the stored two FIFOs, the number of packets of the CANO and the number of packets of the CAN1 of the same data type, and comparing whether the two numbers of packets is greater than zero
detecting CAN channel communication by comparing the number of packets of the CANO and the number of packets of the CAN1 when either of the two numbers of packets is greater than zero.

Further, detecting CAN channel communication by comparing the number of packets of the CANO and the number of packets of the CAN1 and receiving data, comprises:
comparing the number of FIFO packets of the CANO and the number of FIFO packets of the CAN1 of the same data type, specifically comprising:
determining that the CAN1 channel is abnormal and receiving all the data from the CANO channel that is the only trusted channel, when the number of packets of the CANO is greater than the number of packets of the CAN1 and the difference exceeds an allowable threshold;
determining that the CANO channel is abnormal and receiving all the data from the CAN1 channel that is the only trusted channel, when the number of packets of the CAN1 is greater than the number of packets of the CANO and the difference exceeds the allowable threshold; and
performing a subsequent packet reception cycle according to the smallest number of packets, when the difference between the number of packets of the CANO and the number of packets of the CAN01 is less than the allowable threshold or the number of packets of the CANO is equal to the number of packets of the CAN01.

The allowed threshold may be set or adjusted based on actual communication conditions.

Further, identifying a CAN ID sequence number of the received data and comparing it with the sequence number expected to be received, comprises:
determining condition of the data by comparing the CAN ID sequence number with the sequence number expected to be received, specifically comprising:
determining the condition as correct when the CAN ID sequence number is equal to the sequence number expected to be received;
determining the condition as duplicate packet and performing packet-discarding process when the CAN ID sequence number is less than the sequence number expected to be received; and
determining the condition as packet loss and retaining the data until next cycle to compare its CAN ID sequence number with the sequence number expected to be received again, when the CAN ID sequence number is greater than the sequence number expected to be received.

Further, performing packet reception according to a comparison result of the sequence numbers, comprises:
receiving the correct CANO packet and performing nothing to the CAN1 data packet regardless of its condition, when the condition of the CANO packet is determined to be correct;
receiving the CAN1packet, when the condition of the CANO packet is determined to be packet loss or duplicated packet and the condition of the CAN1 packet is determined to be correct; and
skipping the current cycle, incrementing the sequence number expected to be received by one, and entering a next cycle of sequence number comparison, when the condition of the CANO packet is determined to be packet loss and the condition of the CAN1 packet is determined to be packet loss.

On the second aspect, a CAN data receiving device for an Automatic Train Operation system, characterized in that the device comprises a channel detection unit, a sequence number comparison unit, and a packet receiving unit, wherein:
the channel detection unit is configured to detect CAN channel communication by comparing the number of packets of the CANO and the number of packets of the CAN1 and to receive data, when either the number of packets of the CANO channel or the number of packets of the CAN1 channel is greater than zero;
the sequence number comparison unit is configured to identify a CAN ID sequence number of the received data and comparing it with a sequence number expected to be received; and
the packet receiving unit is configured to perform packet receiving according to a comparison result of the sequence numbers.

On the third aspect, a CAN data transmitting method for an Automatic Train Operation system comprises:
the Automatic Train Operation system performs data transmission using a dual CAN buses, and
the dual CAN buses comprises the CANO and the CAN1
transmitting, by a transmitting end, same data once via the CANO and once via the CAN1; and
receiving, by a receiving end, the data by using the above-mentioned CAN data receiving method for an Automatic Train Operation system when the receiving end receives packets from a CANO channel and a CAN1 channel.

On the fourth aspect, an electronic device comprises a processor, a communication interface, a memory and a communication bus, wherein the processor, the communication interface and the memory communicate with one another via the communication bus;
the memory is configured to store a computer program; and
the processor is configured to implement the above-mentioned CAN data receiving method for an Automatic Train Operation system when it executes the computer program stored in the memory.

On the fifth aspect, a computer-readable storage medium stores a computer program, the computer program, when executed by a processor, implements the above-mentioned CAN data receiving method for an Automatic Train Operation system.

This disclosure has at least the following beneficial effects:
This disclosure fully utilizes the redundancy of the two CAN communication channels. It respectively identifies the CAN ID sequence numbers of the same type of data on the redundant channels and compares them with the sequence number expected to be received. If correct, the data is accepted; if abnormal, it is either discarded or retained. By fully leveraging redundant transmission, it ensures that each received packet is verified against the data from both communication channels in terms of type and sequence number, thereby guaranteeing the accuracy and continuity of the data.

Additional features and advantages of this disclosure will be set forth in the description which follows, or in part will be obvious from the description, or may be learned by practice of the disclosure. The objectives and other advantages of the disclosure may be realized and attained by the structure particularly pointed out in the written description and the appended drawings.

### BRIEF DESCRIPTION OF DRAWINGS

In order to more clearly illustrate the embodiments of this disclosure or the technical solutions in the prior art, the following will briefly introduce the drawings that need to be used in the description of the embodiments or the prior art. Obviously, the drawings in the following description are some embodiments of this disclosure. For those of ordinary skill in the art, other drawings can be obtained based on these drawings without exerting creative efforts.
Fig. 1 is a schematic flowchart of the CAN data receiving method according to an embodiment of this disclosure;
Fig. 2 is a schematic diagram of redundant CAN communication within the Automatic Train Operation system;
Fig. 3 is a structural diagram of the CAN communication receiving device;
Fig. 4 is a schematic flowchart of the redundant CAN communication data receiving method;
Fig. 5 is a schematic flowchart of a redundant receiving method for identifying CAN ID sequence numbers;
Fig. 6 is a schematic structural diagram of a CAN data receiving device according to an embodiment of this disclosure;
Fig. 7 is a schematic structural diagram of the electronic device.

### DETAILED DESCRIPTION

In order to make the purpose, technical solutions and advantages of the embodiments of this disclosure clearer, the technical solutions in the embodiments of this disclosure will be clearly and completely described below in conjunction with the accompanying drawings in the embodiments of this disclosure. Obviously, the described embodiments are some embodiments of this disclosure, not all embodiments. Based on the embodiments in this disclosure, all other embodiments obtained by those of ordinary skill in the art without creative efforts fall within the scope of protection of this disclosure.

Compared with single channel communication, redundant channels communication can improve the reliability of system communication. If one channel experiences an anomaly, the other can ensure normal communication.

In this disclosure, the data received from the two redundant CAN channels is first classified based on the data type and then is placed into their respective CAN FIFOs (FIFO, namely, first in first out, refers to a type of data storage or buffer that operates in a first-in and first out manner). Next, the numbers of packets of the same type in the two redundant CAN FIFOs are identified. If the identified number of packets is greater than zero, the receiving logic based on identifying the ID sequence numbers is performed. Finally, data is received redundantly according to the ID sequence numbers. This receiving method of this disclosure redundantly receives data using two CAN channels and receives the data based on the sequence numbers, thereby enhancing the reliability of data in train automatic operation systems.

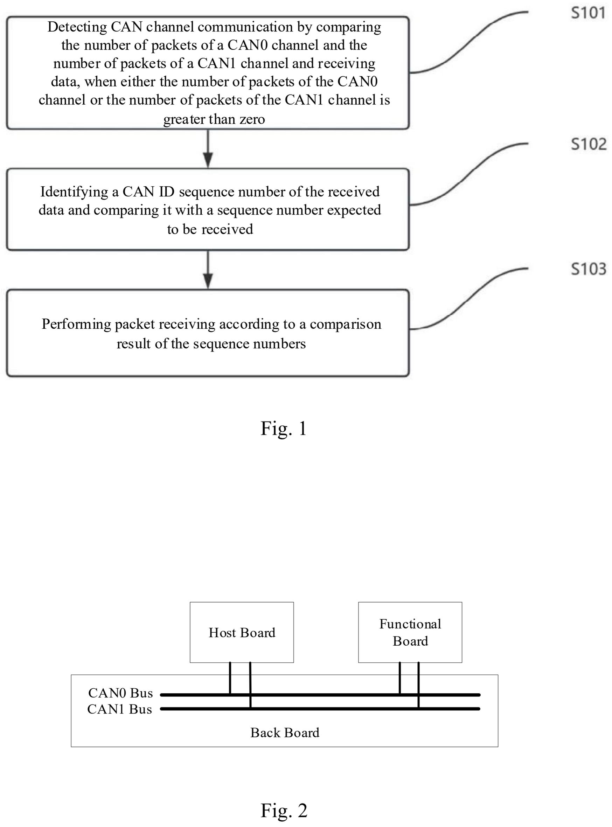

As shown in Fig. 1, a CAN data receiving method for a Train Automatic Operation system is provided, the method comprises:
S101, detecting CAN channel communication by comparing the number of packets of a CANO channel and the number of packets of a CAN1 channel and receiving data, when either the number of packets of the CANO channel or the number of packets of the CAN1 channel is greater than zero;
S102, identifying a CAN ID sequence number of the received data and comparing it with a sequence number expected to be received; and
S103, performing packet receiving according to a comparison result of the sequence numbers.

The specific implementations are described as follows.

Fig. 2 shows a schematic diagram of redundant CAN communication within an Automatic Train Operation system according to an embodiment of this disclosure. As shown in Fig. 2, the Automatic Train Operation system mainly includes a host board and various types of function boards. Different types of functional boards are configured according to the required communication interface types to meet the needs of the train automatic operation system for various train models. In Fig. 2, the host board and functional boards communicate with each other via two mutually redundant CAN buses, enabling data interaction between the various boards of the Train Automatic Operation system. The two CAN communication buses are CANO and CAN1. The host board serves as the core logic control unit of the Train Automatic Operation system, responsible for output control of the functional boards. Through the redundant CAN buses, the host board transmits various types of control instructions to the functional boards, thereby enabling the communication of respective interfaces between the Train Automatic Operation system and external devices. The external devices transmit data to the Train Automatic Operation system by connecting with the communication interfaces on the functional boards. The functional boards receive various types of communication data from the outside, transform the various types of communication data into CAN data, and transmit it to the host board via the redundant CAN buses. The host board receives the CAN packets of the various types of communication data transmitted by the functional boards, such as external 422 communication data, MVB communication data, Ethernet communication data, and so on. The redundant CAN communication works as follows: the same data is transmitted once via CANO and once via CAN1 at the transmitting end so that the same packets exist on both buses, and the same packets can be received from both CANO and CAN1 channels at the receiving end.

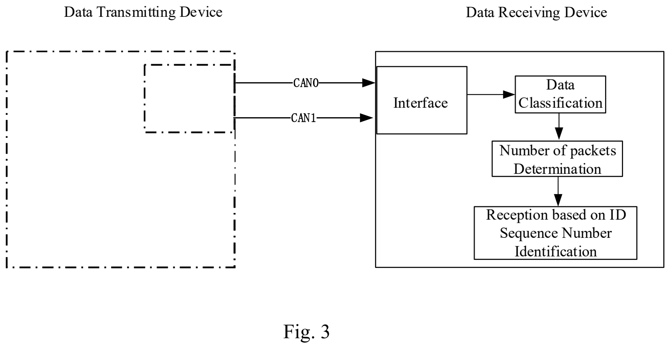

Fig. 3 shows a structural diagram of a CAN communication receiving device according to an embodiment of this disclosure. As shown in Fig. 3, the redundant CAN data is transmitted from the data transmitting port, reaches the data receiving end via the CAN line, and is then be received by passing through the CAN communication interfaces. The received data is classified and placed into different FIFOs. Next, the number of packets of the same type received from CANO and CAN1 is determined. If the number is greater than zero, the redundant receiving process based on identifying the ID sequence number is performed.

Based on the above structural diagram of the receiving device disclosed in Fig. 3, Figs. 4 and 5 disclose in detail the process of the redundant receiving process based on identifying ID sequence number.

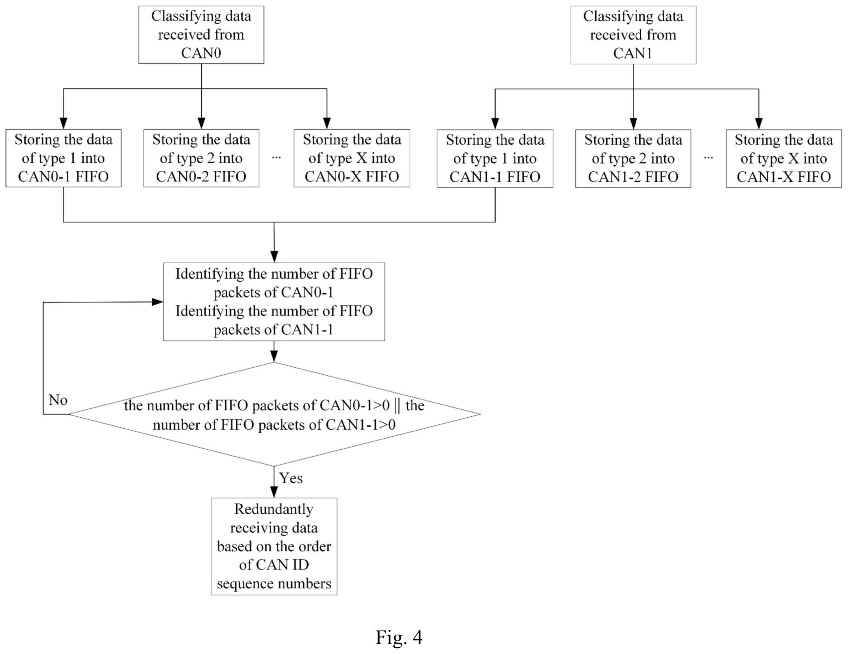

Fig. 4 shows a schematic flowchart of a redundant CAN communication data receiving method according to an embodiment of this disclosure. The Automatic Train Operation system uses redundant CAN buses (namely, CANO and CAN1) communication, and various types of communication data are included on the buses. As shown in Fig. 4, firstly, periodically receiving the packets from the CANO and CAN1 channels via the communication port; reading the number of packets in each channel; for each packet within this number, reading information representing the data type in the CAN ID of each packet; determining the data type of each packet based on the difference among the type information; then storing the data with different types from the CANO bus in different FIFOs (for example, storing the data of the first type in CAN0-1 FIFO, storing the data of the second type in CAN0-2 FIFO,..., storing the data of the X^{th} type in CAN0-X FIFO, as shown in this figure), storing the data with different types from the CAN1 bus in different FIFOs (for example, storing the data of the first type in CAN1-1 FIFO, storing the data of the second type in CAN1-2 FIFO,..., storing the data of the X^{th} type in CAN1-X FIFO, as shown in this figure). This step plays a very important role in subsequent redundant receiving process based on identifying the ID sequence number. Then, the number of packets of the same type stored in the two FIFOs for CANO and CAN1, such as the CAN0-1 FIFO packet and the CAN1-1 FIFO packet shown in the figure, and then whether the two packet numbers are greater than 0 is determined. Next, the receiving process based on identifying the ID sequence number is performed as long as any packet number is greater than 0.

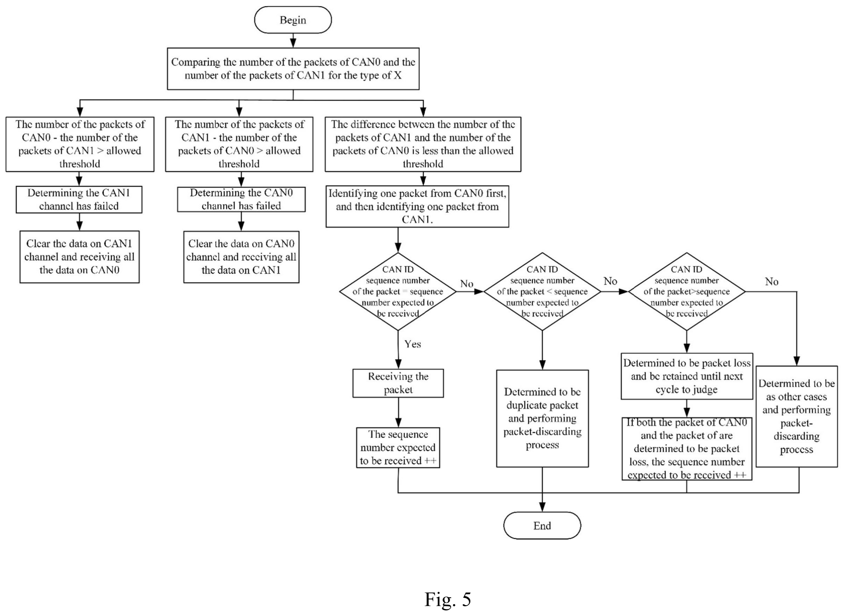

After classifying the data and identifying the number of packets in Fig. 4, enter the process shown in Fig. 5. Fig. 5 discloses a schematic flowchart of a redundant receiving process based on identifying the CAN ID sequence number according to an embodiment. As shown in Fig. 5, firstly a comparison is performed between the number of CANO FIFO packets and the number of CAN1 FIFO packets of a certain type of data. Three comparison results are provided in this disclosure.

The first comparison result is as follows. If the number of CANO packets is greater than that of CAN1 packets, and the difference exceeds the allowable threshold of the difference for one cycle redundant channel, it is determined that the CAN1 channel has an abnormal failure and is regarded as an untrusted channel, and so all the data received in the CAN 1 FIFO are read out and discarded, and that the CANO channel is the only trusted channel and so all the data in the CANO FIFO is received.

The second comparison result is as follows. If the number of CAN1 packets is greater than that of CANO packets, and the difference exceeds the allowable threshold of the difference for one cycle redundant channel, it is determined that the CANO channel has an abnormal failure and is regarded as an untrusted channel, and so all the data received in the CANO FIFO are read out and discarded, and that the CAN1 channel is the only trusted channel and so all the data in the CAN1 FIFO is received.

The third comparison result is as follows. In the case that the difference between the number of CANO packets and the number of CAN1 packets is less than the allowable threshold of the difference for one cycle redundant channel, or even the number of CANO packets and the number of CAN1 packets are the same, if the number of CANO packets is less than or equal to the number of CAN1 packets, the number of CANO packets is selected as the number for the subsequent cycle; if the number of CAN1 packets is less than the number of CANO packets, select the number of CAN1 packets as the number for the subsequent cycle, that is, the smallest number of packets is selected for THE cycle.

Based on the content described for the forgoing third comparison result, after the number of packets used for cycle is determined, one packet of CANO and one packet of CAN1 is copied respectively, the sequence number information in the CAN ID is identified, and whether the sequence number in the CAN ID is the same as the sequence number expected to be received is determined. In this case, the following three comparison results may exist.

For the comparison result 1, if the CAN ID sequence number of the packet is equal to the sequence number expected to be received, the packet is determined to be correct.

For the comparison result 2, if the data CAN ID sequence number of the packet is less than the sequence number expected to be received, the packet is determined to be a duplicate packet. In another words, a packet with the same sequence number has just been received and the same sequence number is identified again. This may be caused by repeated transmission of the CAN, and the packet is to be discarded.

For the comparison result 3, if the data CAN ID sequence number of the packet is less than the sequence number expected to be received, the packet is determined to be packet loss. In another words, the sequence number should be received has not arrived, but a packet with a greater sequence number has arrived. This may be caused by a packet loss on the CAN line. Thus, the data is not to be read but retained until the next cycle to be compared with the sequence number expected to be received again.

After comparing the CAN ID sequence numbers of the CANO and CAN1 packets with the sequence number expected to be receive, as disclosed above, the receiving process begins:

In case 1, if the CANO packet is determined to be correct, the CAN1 packets are not received regardless of their condition, and the correct CANO packets are received. That is, processing is performed according to the principle that CANO takes precedence over CAN1.

In case 2, if the CANO packet is determined to be a lost packet or a duplicate packet, and the CAN1 packet is determined to be correct, the CAN1 packets are received and the redundant receiving process is performed based on the order of the sequence numbers.

In case 3, if the CANO packet is determined to be packet loss, and the CAN1 packet is also determined to be packet loss, that is, no packet with the sequence number expected to be received on either CAN line, and the sequence numbers of the packets on both CAN lines are greater than the sequence number expected to be received, then the sequence number expected to be received is incremented by 1, the current cycle is skipped, and the sequence number comparison process of the next cycle begins.

In other cases, the receiving process is not performed.

The determination of the number of packets for the cycle as described for the comparison result 3 is completed, and for the current cycle, the redundant receiving process based on identifying the CAN ID sequence number according to the type information is completed.

According to the embodiment of the present disclosure, the redundant receiving function based on identifying the sequence number of the CAN ID is applicable to both the host board and all functional boards, and operates in the same manner.

According to the embodiment of the present disclosure, considering that the sequence numbers of each type of CAN ID data at the transmitting end increase independently, the receiving end first classifies the data by the type. This ensures that, in the subsequent processing logic, only data of the same type are compared, and only packets with correct sequence numbers are selected from the redundant channels.

According to the embodiment of the present disclosure, comparing the number of packets of the same type in the redundant channels, the redundant CAN communication bus can perform self-checking. If the difference between the number of packets on the two channels exceeds the allowable threshold, it indicates that one of the two buses is abnormal, and the system switches to single-bus mode to receive all data from the trusted channel.

According to the embodiment of the present disclosure, comparison between the sequence number of the CAN ID and the sequence number expected to be received enables packet reception based on the identified sequence number. Packets with incorrect sequence numbers are handled differently according to their data conditions (whether duplicate packet or packet loss) so as to maximize the utilization of redundant channels. Different data conditions in the redundant channels are handled differently (for example, receiving CANO data if CANO data is correct, or receiving CAN1 data if CANO data is incorrect and CAN1 data is correct), thereby ensuring that the redundancy of the channels is fully exerted.

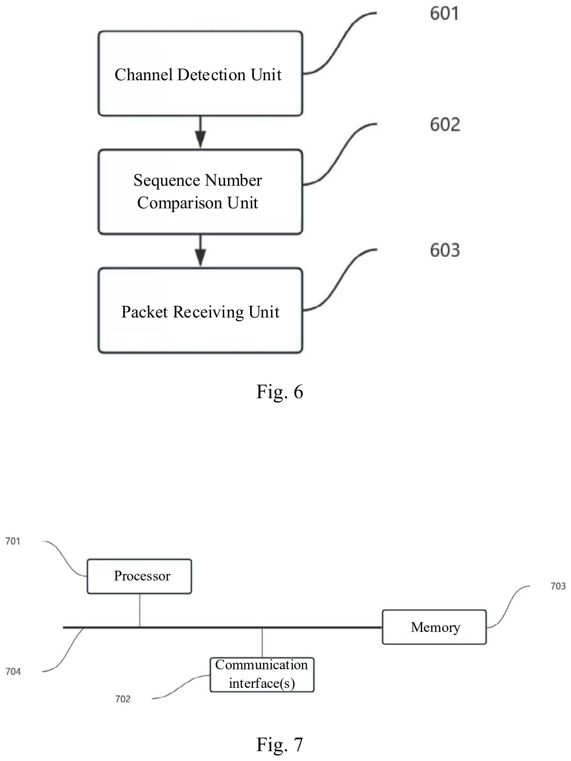

As shown in Fig. 6, on the second aspect, a CAN data receiving device for an Automatic Train Operation system includes a channel detection unit 601, a sequence number comparison unit 602 and a data packet receiving unit 603;

The channel detection unit 601 is used to detect CAN channel communication by comparing the number of packets of the CANO and the number of packets of the CAN1 and to receive data, when either the number of packets of the CANO channel or the number of packets of the CAN1 channel is greater than zero;

The sequence number comparison unit 602 is used to identify a CAN ID sequence number of the received data and comparing it with the sequence number expected to be received;

The data packet receiving unit 603 is used to perform packet receiving according to a comparison result of the sequence numbers.

During specific implementation, the CAN data receiving device used in the Automatic Train Operation system of this disclosure corresponds one-to-one to the implementation process of the CAN data receiving method used in the Automatic Train Operation system.

A CAN data transmitting method for an Automatic Train Operation system, comprises:
the Automatic Train Operation system performs data transmission using a dual CAN buses,
the dual CAN buses comprises the CANO and the CAN1;
the transmitting end transmits the same data once via the CANO and once via the CAN1;
the receiving end uses the CAN data receiving method according to the above-mentioned CAN data receiving method for an Automatic Train Operation system to receive data when it receives packets from the CANO channel and the CAN1 channel.

As shown in Fig. 7, this disclosure provides an electronic device, including a processor 701, a communication interface 702, a memory 703 and a communication bus 704, wherein the processor 701, the communication interface 702 and the memory 703 communicative with each other via the communication bus 704;

The memory 703 stores computer programs;

When the processor 701 is used to execute the computer program stored on the memory 703, the above-mentioned methods are implemented.

This disclosure provides a computer-readable storage medium storing a computer program. When the computer program is executed by a processor, the above methods are implemented.

The computer-readable storage medium may be included in the devices described in the above embodiments; it can also exist separately without being assembled into the devices. The above-mentioned computer-readable storage medium carries one or more programs. When the above-mentioned one or more programs are executed, the method according to the embodiment of this disclosure is implemented.

According to an embodiment of this disclosure, the computer-readable storage medium may be a non-volatile computer-readable storage medium, which may include, for example, but is not limited to: a portable computer disk, a hard disk, a random access memory (RAM), a read-only memory (ROM), an erasable programmable read-only memory (EPROM or Flash memory), a portable compact disk read-only memory (CD-ROM), an optical storage device, a magnetic storage device, or any suitable combination of the foregoing. In this disclosure, a computer readable storage medium may be any tangible medium that can contain or store a program for use by or in connection with an instruction execution system, apparatus, or device.

Although this disclosure has been described in detail with reference to the foregoing embodiments, those of ordinary skill in the art should understand that they can still modify the technical solutions described in the foregoing embodiments or make equivalent replacements for some of the technical features. However, these modifications or substitutions do not cause the essence of the corresponding technical solution to deviate from the spirit and scope of the technical solution of each embodiment of this disclosure.

## Claims

1. A CAN data receiving method for an Automatic Train Operation system, **characterized in that** the method comprises:
detecting CAN channel communication by comparing the number of packets of a CANO channel and the number of packets of a CAN1 channel and receiving data, when either the number of packets of the CANO channel or the number of packets of the CAN1 channel is greater than zero;
identifying a CAN ID sequence number of the received data and comparing it with a sequence number expected to be received; and
performing packet receiving according to a comparison result of the sequence numbers.

2. The CAN data receiving method for an Automatic Train Operation system according to claim 1, **characterized in that**,
either the number of packets of the CANO channel or the number of packets of the CAN1 channel is greater than zero comprises:
classifying the data received from the CANO and the CAN1, and storing the data into different FIFOs according to a bus and a data type to which the data belongs; and
obtaining the number of FIFO packets of the CANO and the number of FIFO packets of the CAN1 of a same data type, and detecting CAN channel communication by comparing the number of packets of the CANO and the number of packets of the CAN1 when either the number of packets of the CANO or the number of packets of the CAN1 is greater than zero.

3. The CAN data receiving method for an Automatic Train Operation system according to claim 2, **characterized in that**,
classifying the data received from the CANO and the CAN1, and storing the data into different FIFOs according to a bus and a data type to which the data belongs, comprises:
classifying the data by identifying data type information in the CAN ID of each packet, wherein the Automatic Train Operation system uses redundant CAN buses communication, namely the CANO and the CAN1, and wherein various types of communication data are included on the buses;
storing the data belongs to different data types from the CANO and the CAN1 buses into different FIFOs, respectively.

4. The CAN data receiving method for an Automatic Train Operation system according to claim 3, **characterized in that**,
storing the data belongs to different data types from the CANO and the CAN1 buses into different FIFOs, respectively, comprises:
periodically receiving packets in the CANO channel and the CAN1 channel via a communication port, reading the number of packets for each channel, and for each packet within this number, reading information representing the data type in the CAN ID of each packet, and determining the data type of each packet based on the different type information;
storing the data of different data types from the CANO bus into different FIFOs, namely storing the data of a first type into a CAN0-1 FIFO, storing the data of a second type into a CAN0-2 FIFO,... and storing the data of the X^{th} type into a CAN0-X FIFO; and
storing the data of different data types from the CAN1 bus into different FIFOs, namely storing the data of the first type into a CAN1-1 FIFO, storing the data of the second type of into a CAN1-2 FIFO,... and storing the data of the X^{th} type into a CAN1-X FIFO.

5. The CAN data receiving method for an Automatic Train Operation system according to claim 2, **characterized in that**,
obtaining the number of FIFO packets of the CANO and the number of FIFO packets of the CAN1 of the same data type, and detecting CAN channel communication by comparing the number of packets of the CANO and the number of packets of the CAN1 when either the number of packets of the CANO or the number of packets of the CAN1 is greater than zero, comprises:
reading, from the stored two FIFOs, the number of packets of the CANO and the number of packets of the CAN1 of the same data type, and comparing whether the two numbers of packets is greater than zero; and
detecting CAN channel communication by comparing the number of packets of the CANO and the number of packets of the CAN1 when either of the two numbers of packets is greater than zero.

6. The CAN data receiving method for an Automatic Train Operation system according to claim 1, **characterized in that**,
detecting CAN channel communication by comparing the number of packets of the CANO and the number of packets of the CAN1 and receiving data, comprises:
comparing the number of FIFO packets of the CANO and the number of FIFO packets of the CAN1 of the same data type, specifically comprising:
determining that the CAN1 channel is abnormal and receiving all the data from the CANO channel that is the only trusted channel, when the number of packets of the CANO is greater than the number of packets of the CAN1 and the difference exceeds an allowable threshold;
determining that the CANO channel is abnormal and receiving all the data from the CAN1 channel that is the only trusted channel, when the number of packets of the CAN1 is greater than the number of packets of the CANO and the difference exceeds the allowable threshold; and
performing a subsequent packet reception cycle according to the smallest number of packets, when the difference between the number of packets of the CANO and the number of packets of the CAN01 is less than the allowable threshold or the number of packets of the CANO is equal to the number of packets of the CAN01.

7. The CAN data receiving method for an Automatic Train Operation system according to claim 1, **characterized in that**,
identifying a CAN ID sequence number of the received data and comparing it with the sequence number expected to be received, comprises:
determining condition of the data by comparing the CAN ID sequence number with the sequence number expected to be received, specifically comprising:
determining the condition as correct when the CAN ID sequence number is equal to the sequence number expected to be received;
determining the condition as duplicated packet and performing packet-discarding handling when the CAN ID sequence number is less than the sequence number expected to be received; and
determining the condition as packet loss and maintaining the data to a next cycle to compare its CAN ID sequence number with the sequence number expected to be received again, when the CAN ID sequence number is greater than the sequence number expected to be received.

8. The CAN data receiving method for an Automatic Train Operation system according to claim 1, **characterized in that**,
performing packet reception according to a comparison result of the sequence numbers, comprises:
receiving the correct CANO packet and performing nothing to the CAN1 data packet regardless of its condition, when the CANO packet is determined to be correct;
receiving the CAN1packet, when the CANO packet is determined to be packet loss or duplicated packet and the CAN1 packet is determined to be correct; and
skipping the current cycle, incrementing the sequence number expected to be received by one, and entering a next cycle of sequence number comparison, when the CANO packet is determined to be packet loss and the CAN1 packet is determined to be packet loss.

9. A CAN data receiving device for an Automatic Train Operation system, **characterized in that** the device comprises a channel detection unit, a sequence number comparison unit, and a packet receiving unit, wherein:
the channel detection unit is configured to detect CAN channel communication by comparing the number of packets of the CANO and the number of packets of the CAN1 and to receive data, when either the number of packets of the CANO channel or the number of packets of the CAN1 channel is greater than zero;
the sequence number comparison unit is configured to identify a CAN ID sequence number of the received data and comparing it with a sequence number expected to be received; and
the packet receiving unit is configured to perform packet receiving according to a comparison result of the sequence numbers.

10. A CAN data transmitting method for an Automatic Train Operation system, **characterized in that** the method comprises:
the Automatic Train Operation system performs data transmission using a dual CAN buses,
the dual CAN buses comprises the CANO and the CAN1;
transmitting, by a transmitting end, same data once via the CANO and once via the CAN1;
receiving, by a receiving end, the data by using the CAN data receiving method according to any one of claims 1 to 8 when the receiving end receives packets from a CANO channel and a CAN1 channel.

11. An electronic device, **characterized in that** the device comprises a processor, a communication interface, a memory and a communication bus, wherein the processor, the communication interface and the memory communicate with one another via the communication bus;
the memory is configured to store a computer program; and
the processor is configured to implement the CAN data receiving method according to any one of claims 1 to 8 when it executes the computer program stored in the memory.

12. A computer-readable storage medium storing a computer program, **characterized in that** the computer program, when executed by a processor, causes the CAN data receiving method according to any one of claims 1 to 8 to be implemented.
